# EUROPÄISCHE PATENTSCHRIFT

(11) **EP 0 295 452 B1**
(45) Veröffentlichungstag und Bekanntmachung des Hinweises auf die Patenterteilung: **24.02.1993**
(21) Anmeldenummer: 88108065.9
(22) Anmeldetag: 19.05.1988
(51) Int. Cl.: B23P 15/42, B23H 9/00, B23D 43/02

(54) **Verfahren zur Herstellung enes Räumwerkzeugs**
Method for making a broaching tool
Procédé de fabrication d'une broche

(30) Priorität: 16.06.1987 DE 3720203
(43) Veröffentlichungstag der Anmeldung: 21.12.1988
(73) Patentinhaber: Hofele, Franz, D-73072 Donzdorf (DE)
(72) Erfinder: Hofele, Franz, D-73072 Donzdorf (DE)
(74) Vertreter: Haug, Dietmar, Dipl.-Ing.

(56) Entgegenhaltungen:
- WO-A-86/07551
- CH-A- 663 372
- DE-A- 2 818 058
- DE-B- 2 607 838

## Beschreibung

Die Erfindung betrifft ein Verfahren zur Herstellung eines Räumwerkzeugs, das mehrere Schneidelemente und eine Halteeinrichtung aufweist, an welcher die Schneidelemente befestigt werden.

Ein derartiges, aus mehreren Teilen zusammengesetztes Räumwerkzeug ist z. B. aus der DE-A-23 00 031 bekannt. Bei diesem Räumwerkzeug, das zum Innenräumen dient, sind die Schneidelemente ringförmig ausgebildet und werden von durch einen Dorn zentrierten ringförmigen Haltern getragen, die sich mit ihren Stirnflächen aufeinander abstützen und mit einer Mutter an einem Ende des Dornes gegen einen Bund am anderen Dornende gegeneinander gespannt sind, wobei jedes der Schneidelemente mit einer Ringmutter gegen die Halter angepreßt wird. Da in der genannten DE-OS über die Herstellung der Schneidelemente und der Halter nichts ausgeführt ist, wird angenommen, daß sie auf herkömmliche Art und Weise durch eine oder mehrere Dreh- oder Fräsoperationen, Wärmebehandlungen und Schleifvorgänge entsprechend der z. B. in der DE-A-34 15 332 beschriebenen Herstellung von einteiligen Räumwerkzeugen hergestellt werden. Durch die Vielzahl der Bearbeitungsschritte und die große Anzahl von Einzelteilen, an denen diese Bearbeitungsschritte ausgeführt werden müssen, ist die Herstellung des vorbekannten mehrteiligen Räumwerkzeugs sehr zeitaufwendig und entsprechend teuer.

Ein mehrteiliges Räumwerkzeug ist auch aus der EP-B-0 013 189 bekannt. Bei diesem Räumwerkzeug werden die ringförmigen Schneidelemente direkt an dem Dorn zentriert und durch Keile, die in Rillen in den Schneidelementen angeordnet sind und mit einer Abflachung an dem Dorn zusammenwirken, gegen Verdrehung gehalten. Die Enden der Rillen sind mit Gießharz aufgefüllt. Zwischen jeweils zwei benachbarten Schneidelementen ist ein Distanzring angeordnet, der ebenfalls von dem Dorn zentriert wird.

Da die genannte EP-PS nicht angibt, wie die einzelnen Teile des Räumwerkzeugs hergestellt werden, ist anzunehmen, daß auch sie in herkömmlicher Art und Weise entsprechend der Herstellung von einteiligen Räumwerkzeugen durch eine oder mehrere Dreh- oder Fräsoperationen, Wärmebehandlungen und Schleifvorgänge hergestellt werden. Das Auffüllen der Enden der Rillen in den Schneidelementen mit Gießharz stellt einen weiteren Bearbeitungsschritt dar. Wie die Herstellung des aus der DE-A-23 00 031 bekannten Räumwerkzeugs, ist auch die Herstellung des aus der EP-B-0 013 189 bekannten Räumwerkzeugs langwierig und entsprechend teuer.

Die Aufgabe der Erfindung besteht darin, ein Verfahren zur Herstellung eines gattungsgemäßen Räumwerkzeugs anzugeben, das wesentlich rascher und kostengünstiger in weniger Arbeitsschritten durchgeführt wird, wobei eine hohe Präzision, lange Standzeiten und eine einfache Nachschärfung des erhaltenen Räumwerkzeugs gewährleistet sind.

Die Aufgabe der Erfindung wird dadurch gelöst, daß zumindest einige der Schneidelemente gleichzeitig in einem Arbeitsgang aus einem Paket von Metallstücken funkenerosiv mit einem Steigungswinkel herausgeschnitten werden, der dem Freiwinkel der Schneidelemente entspricht.

Das erfindungsgemäße Verfahren hat den Vorteil, daß die Schneidelemente fast oder ganz auf Endmaß mit der erforderlichen Endhärte in einem Arbeitsgang hergestellt werden können, denn das funkenerosive Schneiden führt zu einer hohen Maßgenauigkeit und einer hohen Oberflächengüte der Schneidelemente und erlaubt den Einsatz von harten oder gehärteten Werkstoffen, die den für die Schneidelemente erforderlichen Härtegrad bereits haben. Ferner können mit dem erfindungsgemäßen Verfahren Schneidelemente für alle Arten von Räumwerkzeugen zum Innenräumen, Außenräumen und Planräumen in allen Größen und in einer Vielfalt von Formen hergestellt werden, die zum Teil mit den herkömmlichen Verfahren nicht erhalten werden können. Eine besonders rationelle Herstellung der Schneidelemente wird dadurch erzielt, daß zumindest einige der Schneidelemente in einem Arbeitsgang aus einem Paket von Metallstücken funkenerosiv herausgeschnitten werden. Durch eine derartige "Paketherstellung" der Schneidelemente wird außerdem die gleiche hohe Maßgenauigkeit bei allen im Paket hergestellten Schneidelementen erzielt.

Für ein Räumwerkzeug, wie es z. B. aus der EP-B-0 013 189 bekannt ist, bei dem-die Schneidelemente ringförmig ausgebildet sind und an einer Umfangsseite in radialer Richtung vorstehende, in Umfangsrichtung beabstandete Zähne haben und die Halteeinrichtung einen im wesentlichen zylindrischen Körper aufweist, auf dem die Schneidelemente im axialen Abstand voneinander koaxial aufgereiht sind, wobei sie durch Anlage mit einer den Zähnen gegenüberliegenden Umfangsfläche an einer Umfangsfläche des zylindrischen Körpers zentriert werden, kann das erfindungsgemäße Verfahren in vorteilhafter Weise so durchgeführt werden, daß zumindest einige der Schneidelemente gleichzeitig in einem Arbeitsgang aus einem Stapel von Metallplatten durch Drahterosion herausgeschnitten werden, wobei die die Zähne in radialer Richtung begrenzenden Flächenabschnitte kegelig und die zwischen den Zähnen liegenden Flächenabschnitte zylindrisch geformt werden. Eine weitere Bearbeitung der auf diese Weise erhaltenen Schneidelemente durch Schleifen, wie es bei den Schneidelementen des vorbekannten Räumwerkzeugs erforderlich ist, um die Schneidelemente auf ihre endgültige Form und ihr Endmaß zu bringen, ist bei dem erfindungsgemäßen Verfahren nicht notwendig. Der Steigungswinkel der kegeligen Flächenabschnitte der Zähne, der bei dem Räumwerkzeug als Freiwinkel bezeichnet wird, ist bei allen gleichzeitig herausgeschnittenen Schneidelementen gleich und beliebig wählbar. Dagegen beträgt der Spanwinkel der Zähne 0°. Um einen anderen Spanwinkel zu erhalten, müßten die Schneidelemente nach der funkenerosiven Bearbeitung evtl. durch Schleifen nachbearbeitet werden.

Wie bereits erwähnt, können mit dem erfindungsgemäßen Verfahren Räumwerkzeuge zum Innenräumen und auch zum Außenräumen hergestellt werden. Für ein Räumwerkzeug zum Innenräumen, wie es aus der EP-B-0 013 189 bekannt ist, bei dem die Zähne an der äußeren Umfangsseite der Schneidelemente angeordnet sind und zumindest ein Abschnitt, der die zentrale Öffnung der Schneidelemente begrenzenden Umfangsfläche zylindrisch geformt ist, kann nach einer Weiterbildung der Erfindung die zentrale Öffnung der Schneidelemente dadurch erhalten werden, daß zunächst ein einen kleineren Durchmesser als die zentrale Öffnung aufweisendes Loch spanend gebohrt und dann der Rest durch Drahterosion herausgeschnitten wird.

Eine einfach herstellbare Verdrehsicherung der Schneidelemente wird nach einer Weiterbildung der Erfindung dadurch erhalten, daß die zentrale Öffnung der Schneidelemente über einen Teil ihres Umfangs zylindrisch und über den restlichen Teil eben ausgeführt wird, und daß die äußere Umfangsfläche des zylindrischen Körpers mit einer in der Breite mit dem ebenen Umfangsteil der zentralen Öffnung übereinstimmenden Abflachung ausgeführt wird und dann die Schneidelemente formschlüssig auf dem zylindrischen Körper angeordnet werden. Zusätzliche Verdrehsicherungselemente wie z. B. die Keile bei dem Räumwerkzeug nach der EP-B-0 013 189 sind nicht erforderlich.

Wenn bei einem Räumwerkzeug zum Innenräumen der Freiwinkel der Zähne sämtlicher Schneidelemente gleich sein soll, der Zahnvorschub, d. h. der Höhenunterschied von einem Zahn eines Schneidelements zu dem entsprechenden Zahn eines nachfolgenden Schneidelements, sich von dem unterscheiden soll, der sich beim Herausschneiden von aufeinander angeordneten Schneidelementen in einem Stapel von Metallplatten zwangsweise ergibt, kann das erfindungsgemäße Verfahren wie folgt abgewandelt werden. Die Schneidelemente werden gruppenweise aus dem Stapel von Metallplatten durch Drahterosion herausgeschnitten, wobei die die Zähne begrenzenden kegeligen Umfangsflächenabschnitte der in den Gruppen an gleicher Position angeordneten Schneidelementen verschiedene kleine oder große Durchmesser aber den gleichen Steigungswinkel haben und wobei die Schneidelemente verschiedener Gruppen nacheinander an dem zylindrischen Körper aufgereiht werden. Durch Variieren der Reihenfolge der Schneidelemente aus den verschiedenen Gruppen kann außerdem der Zahnvorschub bei einem Räumwerkzeug unterschiedlich gemacht werden.

Es ist noch darauf hinzuweisen, daß das erfindungsgemäße Verfahren nicht auf die Herstellung von Schneidelementen, an denen je nach Zahnvorschub Schrupp-, Schlicht- und Schabezähne mit oder ohne Spanbrechernuten untergebracht sind,beschränkt ist, sondern auch Teile des glättenden Teiles eines Räumwerkzeugs und evtl. zwischen den Schneid-und Glättelementen angeordnete Distanzstücke mit dem erfindungsgemäßen Verfahren hergestellt werden können.

Anhand der Zeichnungen wird nun die Erfindung beispielsweise näher erläutert. Es zeigen
- Fig. 1: ein nach dem erfindungsgemäßen Verfahren hergestelltes Räumwerkzeug zum Innenräumen, wobei aus Gründen der Übersichtlichkeit das Räumwerkzeug nur mit dem Schneidenteil dargestellt ist,
- Fig. 2: eine Draufsicht auf ein einzelnes Schneidelement des in Fig. 1 dargestellten Räumwerkzeugs,
- Fig. 3: schematisch die Anordnung der Schneidelemente bei der Herstellung aus einem Stapel von Metallplatten,
- Fig. 4a bis 4c: verschiedene Schneidelemente in der Draufsicht unter Angabe ihrer Position in dem in Fig. 3 dargestellten Stapel,
- Fig. 5: eine ähnliche Darstellung des Räumwerkzeugs wie in Fig. 1, wobei die Schneidelemente gruppenweise aus einem Stapel von Metallplatten hergestellt worden sind, und einige der Schneidelemente mit den Positionen bezeichnet sind,die sie in dem Räumwerkzeug einnehmen, und
- Fig. 6: eine schematische Darstellung der Gruppen von Schneidelementen des in Fig. 5 dargestellten Räumwerkzeugs in einem Stapel von Metallplatten, wobei die in Fig. 5 angegebenen Positionen der Schneidelemente in den verschiedenen Gruppen wiederholt sind und die Durchmesser der ersten vier Schneidelemente des in Fig. 5 gezeigten Räumwerkzeugs beispielsweise angegeben sind.

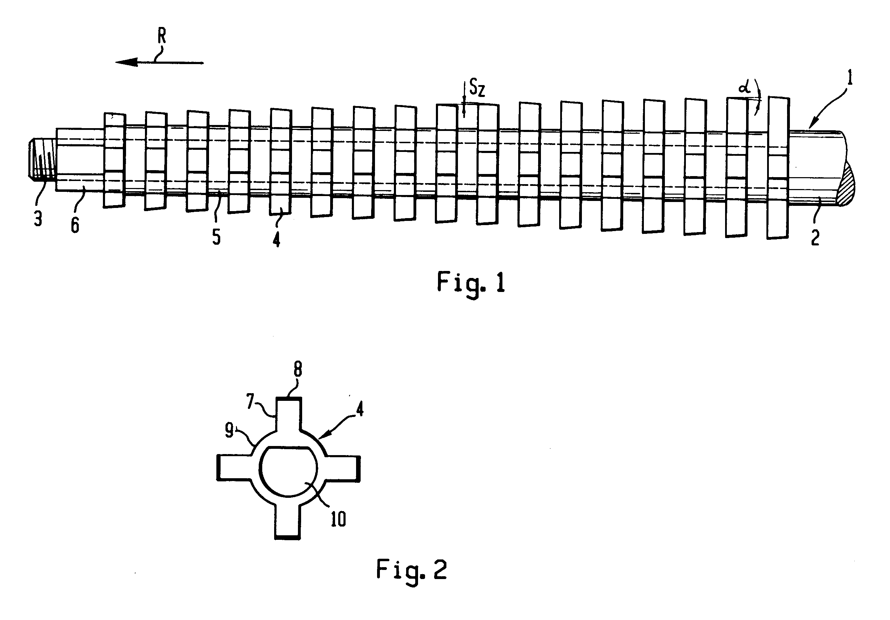

Ein Räumwerkzeug zum Innenräumen, wie es in Fig.1 dargestellt ist, besteht aus einem Dorn 1, der zwischen einem Bund 2 und einem Gewindeabschnitt 3einen mittleren Abschnitt aufweist, auf dem eine Vielzahl von ringförmigen Schneidelementen 4 und Distanzringen 5,von denen jeder zwischen jeweils zwei benachbarten Schneidelementen 4 angeordnet ist, koaxial aufgereiht sind. Die Schneidelemente 4 und die Distanzringe 5 werden durch eine auf dem Gewindeabschnitt 3 des Dorns 1 angeordnete Mutter 6 gegen den Bund 2 des Dorns 1 gedrückt. Die Schneidelemente 4 haben an ihrer äußeren Umfangsseite mehrere in radialer Richtung vorstehende, in Umfangsrichtung beabstandete Zähne 7, deren sie in radialer Richtung begrenzende Flächenabschnitte 8 kegelig ausgeführt sind. Die Flächenabschnitte 9 zwischen den Zähnen sind zylindrisch geformt. Die zentrale Öffnung 10 der Schneidelemente 4 ist über einen Teil ihres Umfangs zylindrisch und über den restlichen Teil eben ausgeführt. Die radiale Länge der Zähne 7 der Schneidelemente 4 ist bei jedem Schneidelement 4 eine andere, wie aus Fig. 1 ersichtlich ist. Die beiden Stirnflächen der Schneidelemente 4 sind eben und parallel zueinander.

Die Anordnung der Schneidelemente 4 auf dem Dorn 1 erfolgt in bekannter Weise so, daß die Schneidelemente 4 mit ihrer den größeren Durchmesser aufweisenden Stirnfläche in Räumrichtung R weisen und die Größe der Schneidelemente 4 entgegen der Räumrichtung R zunimmt.

Der mittlere Abschnitt des Dorns 1 ist über einen Teil seines Umfangs zylindrisch ausgebildet und weist eine Abflachung auf, die sich über die ganze Länge des mittleren Abschnittes des Dorns 1 erstreckt und in der Breite mit dem ebenen Umfangsteil der zentralen Öffnung 10 der Schneidelemente 4 übereinstimmt.

Die Schneidelemente 4 sind formschlüssig auf dem mittleren Abschnitt des Dorns 1 angeordnet, wobei sie durch Anlage der die zentrale Öffnung 10 der Schneidelemente 4 begrenzenden Umfangsfläche an der äußeren Umfangsfläche des mittleren Abschnitts des Dorns 1 zentriert und gegen Verdrehen gesichert werden. Die Zwischenringe 5 werden in entsprechender Weise an dem Dorn 1 zentriert.

Die Schneidelemente 4 werden durch Drahterosion aus Metallplatten hergestellt. Aufgrund der hohen Maßgenauigkeit und der erzielten Oberflächengüte müssen die Schneidelemente 4 nach dem Herausschneiden aus den Metallplatten nicht durch Schleifen nachbearbeitet werden. Allerdings können, falls erwünscht, die Schneidelemente auch auf ein größeres Maß als das Endmaß drahterosiv bearbeitet und anschließend auf das Endmaß geschliffen werden. Auch die Distanzringe 5 können durch Drahterosion hergestellt werden.

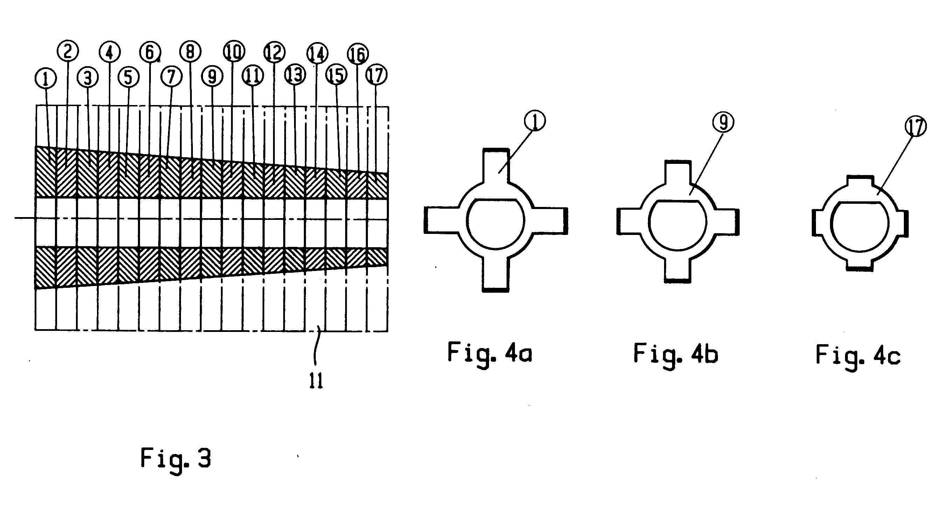

Wie durch Fig. 3 veranschaulicht, werden die Schneidelemente 4 gleichzeitig in einem Arbeitsgang aus einem Stapel von Metallplatten 11 durch Drahterosion herausgeschnitten. Wie aus Fig. 3 ersichtlich ist, liegen die kegeligen Flächenabschnitte 8 der Zähne 7 sämtlicher gleichzeitig in einem Arbeitsgang herausgeschnittenen Schneidelemente 4 auf dem Mantel eines Kegels, dessen Steigung, welche dem Freiwinkel α der einzelnen Zähne 7 entspricht, beliebig wählbar ist. Da die erzeugende Linie des Kegels geradlinig ist, sind die Freiwinkel α bei allen Zähnen 7 sämtlicher Schneidelemente 4 bei der in Fig. 3 veranschaulichten Herstellung gleich. Die Formen der an den Positionen 1, 9 und 17 in dem Stapel der Metallplatten 11 angeordneten Schneidelemente 4 sind aus den Fig. 4a bis 4c ersichtlich. Die Steigung des Kegels bestimmt auch den Zahnvorschub, wobei dieser jedoch je nach Wahl der Reihenfolge der einzelnen Schneidelemente verschieden sein kann. Wenn die Schneidelemente 4 entsprechend ihrer Position im Stapel auf dem Dorn 1 angeordnet werden, hat der Zahnvorschub eine bestimmte durch die Steigung des Kegels vorgegebene Größe. Ein größerer Zahnvorschub ist erhältlich, wenn z. B. nur jedes zweite Schneidelement 4 des Stapels auf dem Dorn des Räumwerkzeugs angeordnet wird.

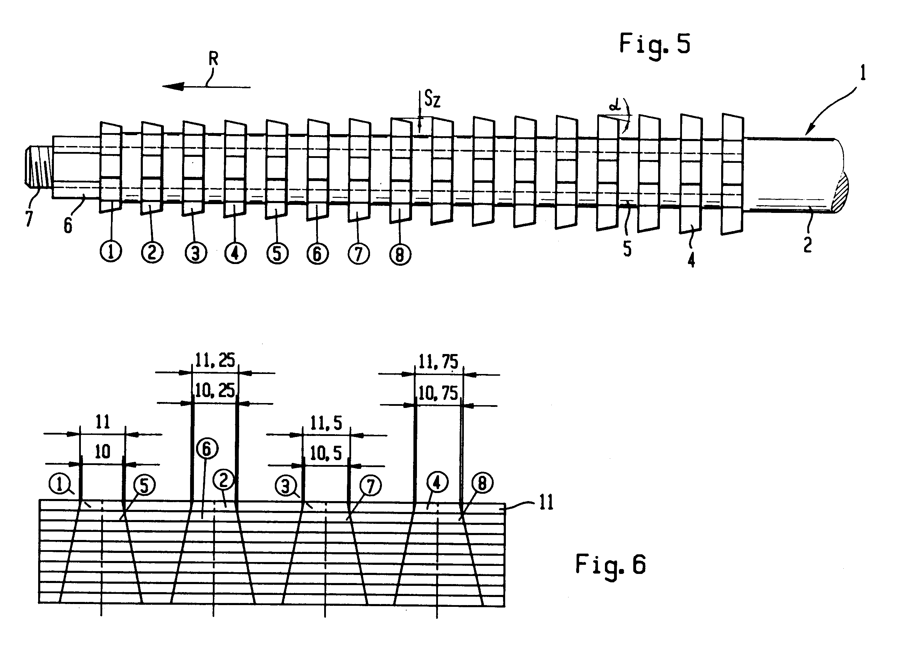

Die Fig. 5 und 6 veranschaulichen eine weitere Variante des erfindungsgemäßen Verfahrens. Hierbei werden die Schneidelemente 4 gruppenweise aus einem Stapel von Metallplatten 11 durch Drahterosion herausgeschnitten. Die Steigungen der Kegel der verschiedenen Gruppen von Schneidelementen 4 sind bei allen Gruppen gleich, und damit sind auch die Freiwinkel α der Zähne sämtlicher Schneidelemente 4 aller Gruppen gleich. Die kleineren oder größeren Durchmesser der an sich entsprechenden Positionen in den Gruppen angeordneten Schneidelemente 4 sind jedoch verschieden. So beträgt z. B. der größere Durchmesser bei den obersten Schneidelementen 4 im Stapel in der ersten Gruppe 11 mm, in der zweiten Gruppe 11,25 mm, in der dritten Gruppe 11,5 mm und in der vierten Gruppe 11,75 mm. Der kleinere Durchmesser dieser Schneidelemente beträgt z. B. in der ersten Gruppe 10,0 mm, in der zweiten Gruppe 10,25 mm, in der dritten Gruppe 10,5 mm und in der vierten Gruppe 10,75 mm. Die Anordnung der auf diese Weise hergestellten Schneidelemente 4 auf dem Dorn 1 erfolgt nun in der Weise, daß die obersten Schneidelemente der ersten, zweiten, dritten und vierten Gruppe nacheinander auf dem Dorn an die Positionen 1 bis 4 angeordnet werden. Dann werden die an der zweiten Stelle der ersten, zweiten, dritten und vierten Gruppe angeordneten Schneidelemente nacheinander auf dem Dorn an die Positionen 5 bis 8 angeordnet. Die weiteren Schneidelemente werden in entsprechender Weise auf dem Dorn angeordnet. Es ist ersichtlich, daß durch diese Art der Herstellung und Anordnung der Schneidelemente kleinere Zahnvorschubwerte S_{z} ermöglicht werden, als sie bei der Herstellung der Schneidelemente in nur einer Gruppe erzielbar sind. Selbstverständlich kann auch durch Abweichung von der oben beschriebenen Reihenfolge der Schneidelemente der Zahnvorschub über die Länge des Dorns variiert werden.

Bei allen Verfahrensvarianten wird die zentrale Öffnung der Schneidelemente dadurch hergestellt, daß zunächst ein einen kleineren Durchmesser als die zentrale Öffnung 10 aufweisendes Loch in den Schneidelementen 4 spanend gebohrt und dann der Rest durch Drahterosion herausgeschnitten wird. Werden die Schneidelemente 4 im Stapel hergestellt, können sie natürlich auch auf einmal spanend gebohrt werden und der Rest durch Drahterosion im Stapel herausgeschnitten werden.

Das erfindungsgemäße Verfahren ermöglicht auch die Herstellung von Schneidelementen mit mehr oder weniger als vier Zähnen. Auch die Form der Zähne kann eine andere als die dargestellte Form sein. Auch die Verdrehsicherung der Schneidelemente kann anders als dargestellt und beschrieben auch mittels Nut und Feder erfolgen.

Zum Nachschärfen werden die Schneidelemente 4 von dem Dorn 1 abgenommen, auf einer Fläche angeordnet und durch Schleifen bearbeitet. Das Nachschärfen durch Schleifen der erfindungsgemäß hergestellten Schneidelemente ist besonders einfach, weil die jeweilige Stirnfläche der Schneidelemente eben und damit der Spanwinkel 0° ist. Um die Durchmesserverringerung der Schneidelemente infolge des Schleifens zu kompensieren, kann bei der Wiederanordnung der Schneidelemente auf dem Dorn das kleinste Schneidelement weggelassen werden.

Bei dem dargestellten und beschriebenen Ausführungsbeispiel ist vorgesehen, daß die Zwischenringe 5 eine zylindrische Form und den gleichen Durchmesser haben. Es ist aber auch möglich, daß die Zwischenringe eine den Schneidelementen entsprechende Form haben, d.h. daß die Zwischenringe mit zunehmendem Durchmesser der Schneidelemente im Durchmesser größer werden und außen konisch sind, um den Abstand der Zähne von den Zwischenringen im wesentlichen über die Länge des Räumwerkzeugs konstant zu halten, so daß auch die größeren Schneidelemente eine ausreichende Abstützung durch die Zwischenringe erfahren. Gerade solche konisch ausgebildeten Zwischenringe können dann am besten wie die Schneidelemente einzeln oder im Paket durch Drahterosion hergestellt werden.

## Patentansprüche

1. Verfahren zur Herstellung eines Räumwerkzeugs, das mehrere Schneidelemente (4) und eine Halteeinrichtung (1) aufweist, an welcher die Schneidelemente (4) befestigt werden, **dadurch gekennzeichnet,** daß zumindest einige der Schneidelemente (4) gleichzeitig in einem Arbeitsgang aus einem Paket von Metallstücken (11) funkenerosiv mit einem Steigungswinkel herausgeschnitten werden, der dem Freiwinkel (α) der Schneidelemente (4) entspricht.

2. Verfahren nach Anspruch 1, wobei die Schneidelemente (4) ringförmig ausgebildet sind und an einer Umfangsseite in radialer Richtung vorstehende, in Umfangsrichtung beabstandete Zähne (7) haben und die Halteeinrichtung einen im wesentlichen zylindrischen Körper (1) aufweist, auf dem die Schneidelemente (4) im axialen Abstand voneinander koaxial aufgereiht sind, wobei sie durch Anlage mit einer den Zähnen (7) gegenüberliegenden Umfangsfläche an einer Umfangsfläche des zylindrischen Körpers (1) zentriert werden, **dadurch gekennzeichnet,** daß zumindest einige der Schneidelemente (4) gleichzeitig in einem Arbeitsgang aus einem Stapel von Metallplatten (11) durch Drahterosion herausgeschnitten werden, wobei die die Zähne (7) in radialer Richtung begrenzenden Flächenabschnitte (8) kegelig und die zwischen den Zähnen liegenden Flächenabschnitte (9) zylindrisch geformt werden.

3. Verfahren nach Anspruch 2, wobei die Zähne (7) an der äußeren Umfangsseite der Schneidelemente (4) angeordnet sind und zumindest ein Abschnitt der die zentrale Öffnung (10) der Schneidelemente (4) begrenzenden Umfangsfläche zylindrisch geformt ist, **dadurch gekennzeichnet,** daß die zentrale Öffnung (10) der Schneidelemente dadurch erhalten wird, daß zunächst ein einen kleineren Durchmesser als die zentrale Öffnung (10) aufweisendes Loch spanend gebohrt und dann der Rest durch Drahterosion herausgeschnitten wird.

4. Verfahren nach Anspruch 3, **dadurch gekennzeichnet,** daß die zentrale Öffnung (10) der Schneidelemente (4) über einen Teil ihres Umfangs zylindrisch und über den restlichen Teil eben ausgeführt wird und die äußere Umfangsfläche des zylindrischen Körpers (1) mit einer in der Breite mit dem ebenen Umfangsteil der zentralen Öffnung übereinstimmenden Abflachung ausgeführt wird und die Schneidelemente (4) formschlüssig auf dem zylindrischen Körper (1) angeordnet werden, so daß sie gegen Verdrehung gesichert sind.

5. Verfahren nach Anspruch 4, **dadurch gekennzeichnet,** daß die Schneidelemente (4) gruppenweise aus dem Stapel von Metallplatten (11) durch Drahterosion herausgeschnitten werden, wobei die die Zähne (7) begrenzenden kegeligen Umfangsflächenabschnitte (8) der in den Gruppen an gleicher Position angeordneten Schneidelemente (4) verschiedene kleine oder große Durchmesser, aber den gleichen Steigungswinkel (α) haben und wobei die Schneidelemente (4) verschiedener Gruppen nacheinander an dem zylindrischen Körper (1) aufgereiht werden.

## Claims

1. A method of manufacturing a broach which has a plurality of cutting elements (4) and a retaining device (1) to which the cutting elements (4) are secured, characterised in that at least some of the cutting elements (4) are cut out simultaneously in a single pass from a set of metal members (11) by spark erosion, with an angle of inclination corresponding to the clearance angle (α) of the cutting elements (4).

2. A method as claimed in claim 1, the cutting elements (4) being annular and having on one side of their circumference radially projecting teeth (7) spaced in the circumferential direction, and the retaining device comprising a substantially cylindrical member (1), on which the cutting elements (4), mutually spaced in the axial direction, are coaxially threaded, the cutting elements being centred because a circumferential surface opposite the teeth (7) bears on a circumferential surface of the cylindrical member (1), characterised in that at least some of the cutting elements (4) are cut out simultaneously in a single pass from a stack of metal plates (11) by wire erosion, the surface portions (8) defining the teeth (7) in the radial direction being formed conically, and the surface portions (9) lying between the teeth being formed cylindrically.

3. A method as claimed in claim 2, wherein the teeth (7) are situated on the outer circumferential side of the cutting elements (4), and at least a portion of the circumferential surface defining the central aperture (10) In the cutting elements (4) is formed cylindrically, characterised in that the central aperture (10) in the cutting elements is obtained by first drilling a hole by cutting, this hole having a smaller diameter than the central aperture (10), and then cutting out the remainder by wire erosion.

4. A method as claimed in claim 3, characterised in that the central aperture (10) in the cutting elements (4) is made cylindrical over part of its circumference and flat over the remainder, and the outer circumferential surface of the cylindrical member (1) is made with a flat portion coinciding in width with the flat circumferential portion of the central aperture, and the cutting elements (4) are mounted positively on the cylindrical member (1) so that they are secured against twisting.

5. A method as claimed in claim 4, characterised in that the cutting elements (4) are cut out in groups from the stack of metal plates (11) by wire erosion, the conical circumferential surface portions (8) defining the teeth (7) of the cutting elements (4) which are arranged in the same position in the groups have different small or large diameters, but the same angle (α) of inclination, and the cutting elements (4) of different groups are threaded in succession on to the cylindrical member (1).

## Revendications

1. Procédé de fabrication d'un outil de brochage, présentant plusieurs éléments de coupe (4) et un dispositif de support (1), sur lequel sont fixés les éléments de coupe (4), caractérisé en ce qu'au moins quelques uns des éléments de coupe (4) sont découpés simultanément, en une passe opératoire, à partir d'un paquet de pièces métalliques (11), par électroérosion, avec un angle de pente correspondant à l'angle de dépouille (α) des éléments de coupe (4).

2. Procédé selon la revendication 1, les éléments de coupe (4) étant réalisés sous une forme annulaire et présentant des dents faisant saillie en direction radiale, espacées en direction périphérique (7) et le dispositif de support présentant un corps sensiblement cylindrique (1), sur lequel les éléments de coupe (4) sont alignés coaxialement, avec un espacement axial les uns par rapport aux autres, en étant centrés par appui à l'aide d'une surface périphérique, opposée aux dents (7), sur une surface périphérique du corps cylindrique (1), caractérisé en ce qu'au moins quelques uns des éléments de coupe (4) sont découpés simultanément, en une passe opératoire, à partir d'un empilement de plaques métalliques (11), par électroérosion à fil, les sections de surface (8) délimitant les dents (7) en direction radiale étant coniques et les sections de surface (9) situées entre les dents étant de forme cylindrique.

3. Procédé selon la revendication 2, les dents (7) étant disposées sur la face périphérique extérieure des éléments de coupe (4) et au moins une partie de la surface périphérique, délimitant l'ouverture centrale (10) des éléments de coupe (4), étant de forme cylindrique, caractérisé en ce que l'ouverture centrale (10) des éléments de coupe est obtenue en opérant d'abord un percage avec enlèvement de copeaux, à un plus petit diamètre que l'ouverture centrale (10), puis un évidage du reste par électroérosion à fil.

4. Procédé selon la revendication 3, caractérisé en ce que l'ouverture centrale (10) des éléments de coupe (4) est réalisée cylindrique sur une partie de sa périphérie et plane sur la partie restante et la surface périphérique extérieure du corps cylindrique (1) est réalisée avec un méplat, coïncidant avec la partie périphérique plane de l'ouverture centrale, et les éléments de coupe (4) sont disposés avec ajustement de forme sur le corps cylindrique (1), de façon à être à l'abri de torsion.

5. Procédé selon la revendication 4, caractérisé en ce que les éléments de coupe (4) sont découpés à partir de l'empilement de plaques métalliques (11), au moyen d'une électroérosion à fil, les sections de surface périphérique (8) coniques, délimitant les dents (7), des éléments de coupe (4), disposés à la même position dans les groupes, présentant des diamètres différents, plus petits ou plus grands, mais présentant le même angle de pente (α) et les éléments de coupe (4) des différents groupes étant alignés les uns après les autres sur le corps cylindrique (1).
